# EUROPEAN PATENT SPECIFICATION

(11) **EP 3 044 142 B1**
(45) Date of publication and mention of the grant of the patent: **06.12.2017**
(21) Application number: 14789360.6
(22) Date of filing: 09.09.2014
(51) Int. Cl.: B65H 16/06, B65H 18/02, F16D 1/108, F16D 11/00, F16D 11/14

(54) **IMPROVED SUPPORT FOR THE END PINS OF SHAFTS**
VERBESSERTE STÜTZE FÜR DIE ENDSTIFTE VON WELLEN
SUPPORT AMÉLIORÉ POUR LES BROCHES D'EXTRÉMITÉ D'ARBRES

(30) Priority: 10.09.2013 IT VI20130224
(43) Date of publication of application: 20.07.2016
(73) Proprietor: SVECOM - P.E. S.R.L., 36075 Montecchio Maggiore VI (IT)
(72) Inventor: LOVATO, Ferdinando, I-36030 Costabissara (VI) (IT)
(74) Representative: Bonini, Ercole
(86) International application number: PCT/IB2014/001774
(87) International publication number: WO 2015/036832

(56) References cited:
- EP-A1- 0 709 327
- EP-A1- 1 182 158
- DE-U1- 20 120 880
- GB-A- 2 337 249

## Description

The present invention concerns an improved support for the end pins of shafts. The support that is the subject of the invention is suited to support the end pins of shafts of any kind, but it is particularly suited to be used in the paper industry for supporting the end pin of expanding reel carrier shafts.

As is known, the winding and unwinding of continuous paper films or films of other laminar materials with reduced thickness wound in reels are performed using as a winding and unwinding core an expanding shaft whose end pins rotate on special supports that are coupled with a fixed structure.

Each support comprises a cylindrical tube that is suited to be associated with the fixed structure of the machine. In the tube there is a primary shaft that is coaxial with it and has one end projecting from the tube itself.

The projecting end is provided with a prismatic seat with open profile, configured in such a way as to accommodate the prismatic counter-profile of the pin of the shaft on which/from which the film is wound or unwound.

The end of the primary shaft opposite its projecting end is connected to power means that set the primary shaft rotating around its longitudinal axis that coincides with the longitudinal axis of the entire support.

A cylindrical flange is revolvingly and slidingly attached to the projecting end of the primary shaft on the outside of the tube, said flange being provided with a shaped cap that is arranged above the prismatic seat when the cylindrical flange is moved axially.

More precisely, the cylindrical flange can be moved axially and circumferentially with respect to both the tube and the projecting end of the primary shaft, from a backward position, in which it is arranged against the tube with the shaped cap axially offset with respect to the prismatic seat, to an advanced position in which it is arranged with the shaped cap superimposed to the prismatic seat.

In this way, when the cylindrical flange is arranged in the backward position the prismatic seat can be accessed, giving origin to a condition in which the support is open and the prismatic seat can accommodate the pin of the rotating shaft that is fitted therein.

Vice versa, when the flange is arranged in the forward position the prismatic seat cannot be accessed, giving origin to a condition in which the support is closed and the pin of the rotating shaft remains constrained in the prismatic seat.

In order to move the flange from the backward position to the forward position and vice versa, cam means are provided that comprise a cam integral with the flange and a counter-cam integral with the tube which cooperate with each other through sliding contact.

In this way, when the flange is rotated circumferentially, the interference between the cam and the counter-cam generates an axial thrust component that forces the flange to move axially causing the support to open if it was initially closed, or to close if it was initially open.

In order to ensure that during the rotation of the shaft for the winding and/or unwinding of the reel the supports stay closed and that the pins of the rotating shaft remain firmly constrained to the supports, the projecting end of the primary shaft is provided with a counteracting element that when the flange is arranged in the forward position in order to close the support is elastically snap-fitted into a special housing created in the flange itself.

Vice versa, the releasing operation is performed by manually pressing a manoeuvring button that projects from the flange and acts on the counteracting element causing it to move back in its housing so as to allow the backward movement of the flange when it is necessary to open the support.

All the supports of the type described above solve the problem of supporting the ends of the shafts during rotation, but however pose also some acknowledged drawbacks and limitations.

A first recognised drawback is constituted by the fact that the supports described above, even though they are made in such a way that they are ready to accommodate two counteracting elements and two corresponding manoeuvring buttons diametrically opposite each other in order to ensure that the opening operation is rapid and easy, each support is provided with a single counteracting element and a corresponding manoeuvring button.

In fact, the counteracting element and the corresponding button are mounted on the support in such a way that when the support is applied to the machine in operating position the button is arranged in front of the operator and therefore is easy to reach and to press.

Obviously, this would not be possible if both the counteracting elements were mounted on each support, as in order to open the support the operator would have to act on both of the manoeuvring buttons and thus also on the button arranged at the back of the support with respect to the position of the operator. This would force the operator to perform a manoeuvre for which he would need to use both hands, and which would be uncomfortable and even dangerous. For this purpose, the supports are provided with a single counteracting element with the respective manoeuvring button and thus come in a right and a left configuration, so that when the operator needs to open them he/she always works in front of them.

It is clear that this circumstance constitutes a limitation for the manufacturer, who is forced to manage two different types of supports and customise each of them during the assembly stage.

Furthermore, this distinction also involves more difficult maintenance, as the right supports are not interchangeable with the left ones and this forces the user to keep both types of supports in stock.

Another recognised drawback is due to the fact that both the counteracting element and the respective housing have a rounded prismatic shape at the ends and their coupling configuration substantially resembles the coupling configuration of a key or a tab into its seat.

As is known, the profiles in this shape are difficult to be coupled with each other and it frequently happens that at the end of the support closing operation the elastic counteracting elements do not fit perfectly and spontaneously into their respective housings.

In this case, the operator needs to move the flange manually to the completely closed position.

There is thus the risk that, if the closing operation is not completed or the user does not realise that the supports are not completely closed, starting the machine in these conditions would cause the shaft to fall down.

Another and yet not the least drawback lies in that the cam and the counter-cam mutually cooperate by sliding contact and are therefore subject to wear, which makes it necessary to replace them frequently.

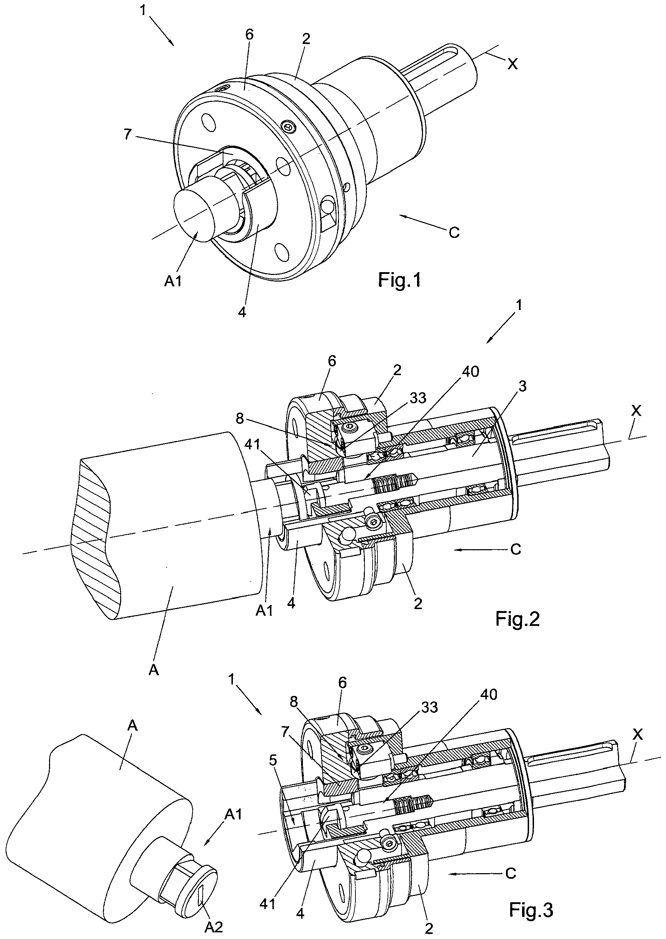

The document EP 0 709 327 is known, which proposes a solution in which the coupling between the end of the shaft and the seat in the support is released by pressing a free end 24 of the locking pin that can be seen in Figure 2.

This solution is simple and can be implemented only on the side of the free end of the pin, in fact it is not possible to modify that configuration of the pin in such a way as to allow a rapid release to be obtained by acting on both sides. The document GB 2 337 249 is also known, which does not propose any manual releasing means suited to release the coupling between the seat in the support and the end of the shaft.

The document DE 201 20 880 is also known, which suggests an alternative solution, according to which a flange-shaped rotating element is used to engage and disengage the shaft end.

Finally, the document EP 1 182 158 is also known, in which there is no axial coupling, and consequently this solution does not propose any releasing means.

The present invention intends to overcome all the drawbacks that are described above and that can be observed in the rotating supports of the known type.

In particular, it is the first object of the invention to provide a support for rotating shafts made in a single type that can be opened frontally by the operator, independently of whether it supports the right pin or the left pin of the rotating shaft.

It is another object of the invention to provide a support that can be closed in a more reliable way than allowed by the equivalent supports belonging to the known art.

It is another, yet not the least object of the invention to provide a support that is less subject to wear than the equivalent supports of the known art.

The objects listed above are achieved by the support that is the subject of the invention, made according to the main claim to which reference is made. Other characteristics of the support that is the subject of the invention are described in the dependent claims.

Advantageously, the support of the invention allows better standardisation of production compared to the supports of the known art.

Still advantageously, the support of the invention is more reliable than the supports of the known art, above all in terms of safe closure.

Finally, to advantage, the support that is the subject of the invention, being less subject to wear, requires less maintenance than the equivalent supports of the known art.

The objects and advantages described above will be illustrated in greater detail in the description of a preferred but not exclusive embodiment of the support of the invention that is provided here below by way of non-limiting example with reference to the attached drawings, wherein:
- Figures from 1 to 3 show three different axonometric views of the support of the invention arranged in the open position and of the shaft end that it supports;
- Figures from 4 to 6 show three different axonometric views of the support of the invention arranged in the closed position;
- Figure 7 shows the cross section of Figure 3 according to a section plane passing through the longitudinal axis of the support;
- Figure 8 shows a front view of Figure 7;

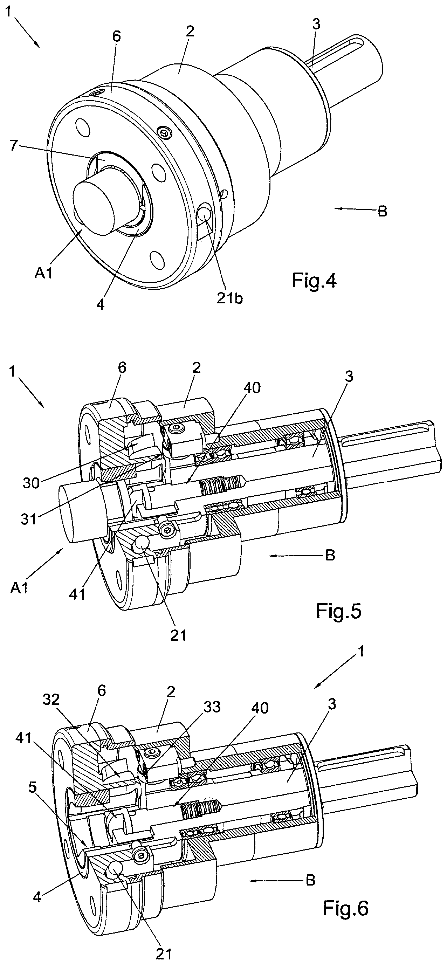

- Figure 9 shows the cross section of Figure 6 according to a section plane passing through the longitudinal axis of the support;
- Figure 10 shows a side view of Figure 9;
- Figure 10a shows a detail of Figure 10;
- Figure 11 shows an axonometric view of part of the support of the invention;

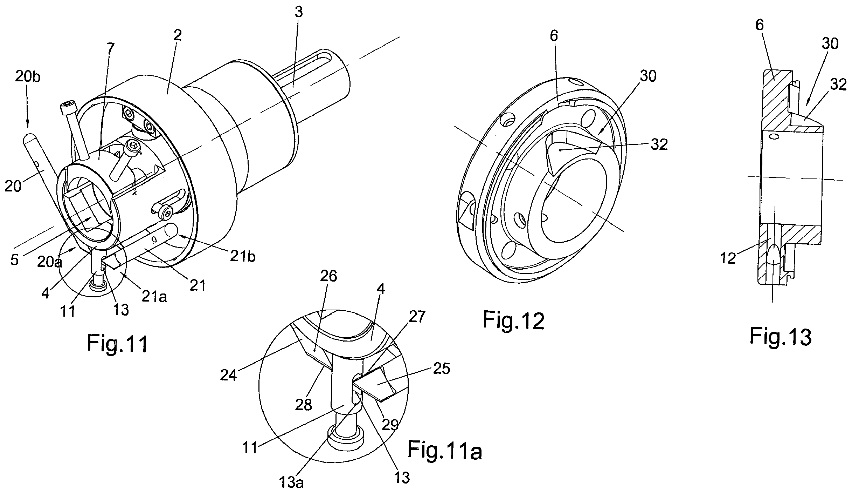

- Figure 11 a shows a detail of Figure 11;
- Figure 12 shows an axonometric view of a detail of the support of the invention;
- Figure 13 shows a side view of Figure 12;

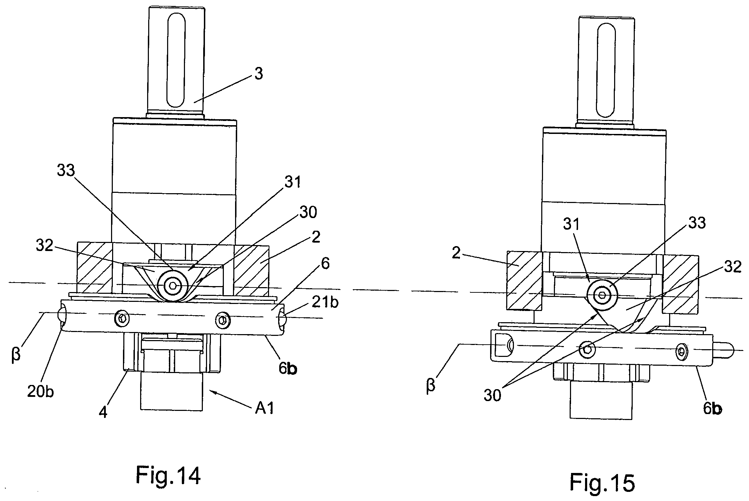

- Figure 14 shows the plan view of the support of the invention partially sectioned and in the open position;
- Figure 15 shows the support of Figure 14 during the closing operation.

The support that is the subject of the invention can be seen in its entirety in the axonometric views from 1 to 6, where it is indicated as a whole by **1.**

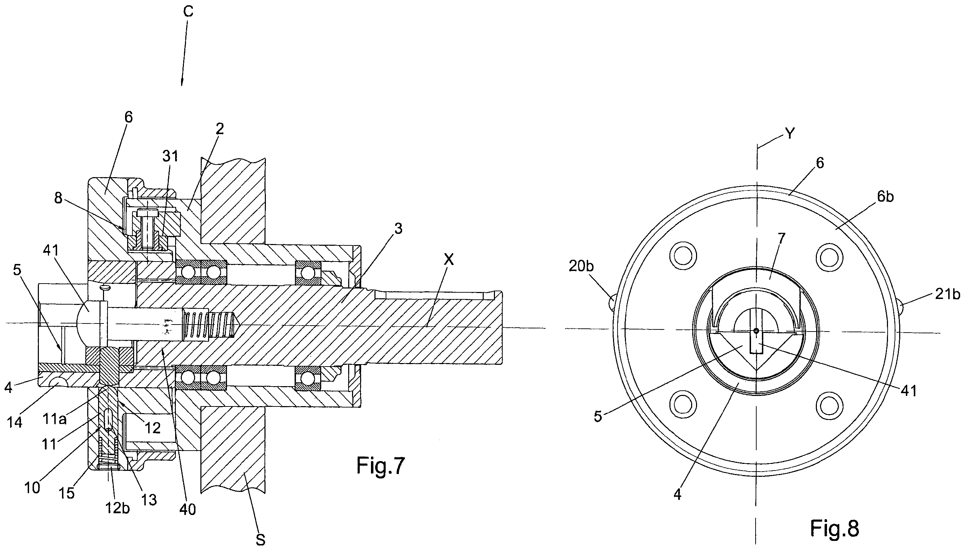

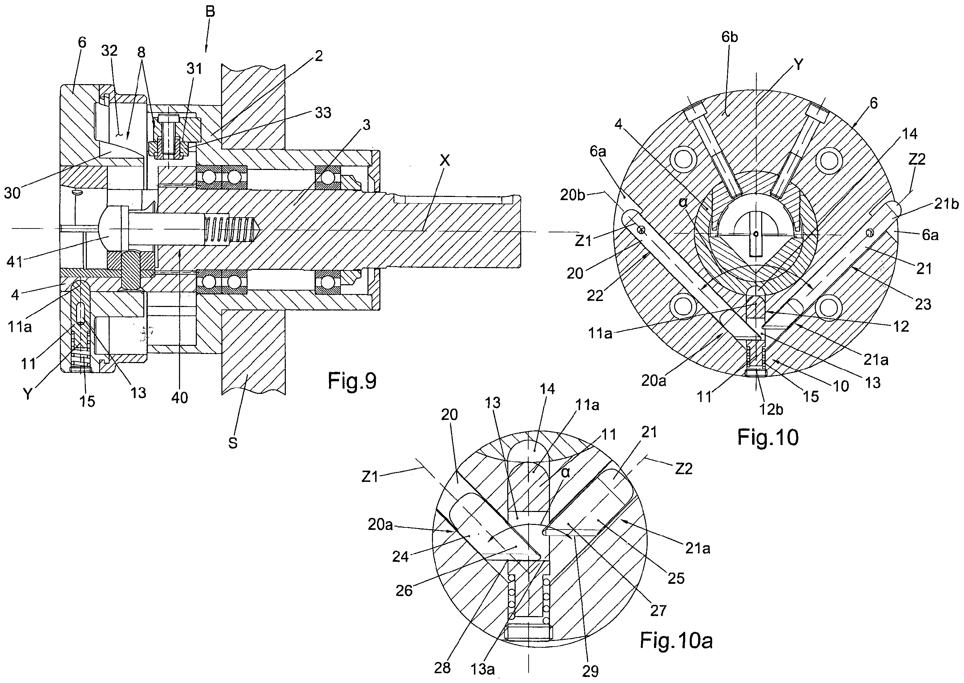

It can be observed that it comprises a tube **2** suited to be associated with a supporting structure indicated by **S** in Figures 7 and 9 and a primary shaft **3** defining a main longitudinal axis **X,** coaxially coupled inside the tube **2** and suited to be associated with power means, not represented in the figures, suited to set it rotating according to said main longitudinal axis **X.**

Said main longitudinal axis **X** defines also the longitudinal axis of the entire support **1.**

The primary shaft **3** has an end **4** projecting from the tube **2** and provided with a prismatic seat **5** with open profile created therein and configured in such a way as to accommodate the end pin **A1** of the shaft **A.**

Obviously, in order to support the shaft **A,** two supports **1** are provided, each one of which is arranged at the level of an end pin **A1** of the shaft itself.

It is also possible to observe the presence of a flange **6** which is slidingly coupled with the tube **2** and with the projecting end **4** of the primary shaft **3** and with which a shaped cap **7** is associated.

The support **1** comprises also moving means **8** suited to move the flange **6** with respect to the tube **2** between:
- a first position indicated by **B** and represented in any of the Figures from 4 to 6 and 9, in which the flange **6** is axially spaced from the tube **2** according to the main longitudinal axis **X** and the shaped cap **7** is superimposed to the prismatic seat **5,**
   and
- a second position indicated by **C** and represented in any of the Figures from 1 to 3 and 7, in which the flange **6** is arranged against the tube **2** and the shaped cap **7** is arranged at the side of the prismatic seat **5.**

As is better specified and described below, the first position **B** represented in Figures from 4 to 6 and 9 corresponds to the condition in which the support is closed and the end pin **A1** of the shaft **A** is stably housed in the prismatic seat **5,** while the second position **C** represented in Figures from 1 to 3 and 7 corresponds to the condition in which the support is open and the prismatic seat **5** can house the end pin **A1** of the shaft **A** that is fitted therein.

According to the invention, the support **1** comprises:
- locking means **10** belonging to the flange **6** and to the projecting end **4** of the primary shaft **3** and configured in such a way as to constrain the flange **6** to the projecting end **4** of the primary shaft **3** in said first position **B;**
- two manoeuvring rods **20, 21** slidingly housed in corresponding guide channels **22, 23** made in the flange **6,** wherein each one of the manoeuvring rods **20, 21** has a first end **20a, 21a** configured in such a way as to cooperate with the locking means **10** and a second end **20b, 21b** projecting from the flange **6** and at the disposal of the operator for moving the manoeuvring rod **20, 21** along the respective guide channel **22, 23.**

Regarding the locking means **10,** it can be observed that they comprise:
- a peg **11** provided with a head **11a** and slidingly coupled inside a seat **12** created in the flange **6;**
- a slit **13** made in the peg **11** and configured in such a way as to house both of the first ends **20a, 21a** of the manoeuvring rods **20, 21;**
- a housing **14** obtained in the projecting end **4** of the primary shaft **3** and configured in such a way as to house the head **11a** of the pin **11** that projects from the seat **12** when the flange **6** is arranged in the first position **B;**
- elastic means, preferably but not necessarily a spring **15,** interposed between the peg **11** and the bottom **12b** of the seat **12** in which the pin **11** is housed.

The peg **11** and the seat **12** housing it define a first longitudinal axis **Y** that coincides with the axis of symmetry of the flange **6** and is orthogonal to the main longitudinal axis **X** of the primary shaft **3** and thus of the support 1.

Preferably but not necessarily, the peg **11** and the corresponding seat **12** are cylindrical and the head **11a** of the pin **11** and the housing **14** that accommodates it are preferably but not necessarily spherical.

In particular, it can be observed that the cylindrical seat **12** is constituted by a through hole with circular cross section made in the flange **6.**

The spherical housing **14** is coaxial with the cylindrical seat **12** and with the cylindrical peg **11** according to the first longitudinal axis **Y** when the flange **6** is arranged in said first position **B** in which the spherical head **11a** of the cylindrical peg **11** is accommodated in the spherical housing **14.**

Preferably but not necessarily, the cylindrical peg **11** and the housing **14** have, as already explained, spherical profiles.

In another embodiment of the invention said profiles, instead of being spherical, can be in the shape of a truncated cone or another shape, provided that they match each other in order to stably constrain to each other, without any slack, the circular flange **6** and the projecting end **4** of the primary shaft **3** in said first position **B.**

Vice versa, as can be observed in Figure 7, when the flange **6** is arranged in the second position **C** against the tube **2,** the spherical head **11a** of the peg **11** is completely housed in the cylindrical seat **12** and slidingly acts against the surface of the projecting end **4** of the tube **2,** so that the flange **6** is free to move axially.

Regarding the guide channels **22, 23** in which the manoeuvring rods **20, 21** slide, they define second longitudinal axes, respectively **Z1** and **Z2,** which are coplanar with each other and also with the first longitudinal axis **Y** defined by the cylindrical peg **11** and by the respective cylindrical seat **12.**

Therefore, the second longitudinal axes **Z1** and **Z2** and the first longitudinal axis **Y are** coplanar with one another according to a plane β that can be observed in Figures 14 and 15 and that is parallel to the face **6b** of the flange **6.**

It can be also observed in Figure 10 that the guide channels **22** and **23** and the respective manoeuvring rods **20** and **21** are arranged laterally and on opposite sides with respect to the cylindrical peg **11** and the corresponding cylindrical seat **12** and that the second longitudinal axes **Z1, Z2** defined by the guide channels **22, 23** and by the manoeuvring rods **20, 21** are inclined with respect to the first longitudinal axis **Y** defined by the cylindrical peg **11** and by the respective cylindrical seat **12.**

The second longitudinal axes **Z1** and **Z2** intersect each other and the first longitudinal axis **Y** at the level of the peg **11** and furthermore the second longitudinal axes **Z1** and **Z2** form an angle α that is preferably but not necessarily a right angle.

With reference to Figures 10, 10a, 11 and 11a, the first ends **20a, 21a** of the rods are provided with lowered surfaces **24, 25** that are in contact with each other at the level of the common sliding plane containing the second longitudinal axes **Z1, Z2.**

It can be observed, furthermore, that the manoeuvring rods **20, 21** and the guide channels **22, 23** that house them have circular cross section and match each other precisely, in such a way as to ensure a sliding movement without any slack.

It can also be observed that the lowered surfaces **24, 25** of the first ends **20a, 21a** of the rods **20, 21** have a triangular profile **26, 27** so as to define a side **28, 29** that counteracts a thrusting plane **13a** created in the slit **13** present in the cylindrical peg **11.**

Preferably but not necessarily, said sides and said plane are horizontal.

The width **13b** of the slit **13** is equal to the thickness **20'a, 21'a** of each first end **20a, 21a** of the rods, so that only one end at a time can fit in the slit **13** and interfere with the peg **11** when the respective rod is pushed along the guide channel **22, 23** by the operator who acts on its second end **20b, 21b** projecting from the flange **6.**

Each second end **20b, 21b,** in particular, has a rounded cover and is housed into a recess **6a** created in the flange **6.**

Regarding the moving means **8** that move the flange **6** with respect to the tube **2** and the projecting end **4** of the primary shaft **3,** it can be observed that they comprise a cam **30** present in the flange **6** and a counter-cam **31** present in the tube **2** that are both clearly visible, in particular in Figures 11, 12, 14 and 15.

Regarding the cam **30,** it can be noted that it comprises a shaped recess **32** made in the flange **6,** while the counter-cam **31** is constituted by a rolling bearing **33** belonging to the tube **2.**

In this way, a rolling contact is obtained between the cam **30** and the counter-cam **31** instead of a sliding contact like in the supports of the known art, and this means less wear and reduces the frequency of replacement of the cam **30** and the counter-cam **31.**

Furthermore, it can be observed that when the flange **6** is arranged against the tube **2** in the second position indicated by **C,** which can be observed also in Figure 14, the profile of the rolling bearing **33** and therefore of the counter-cam **31** is completely housed inside the shaped recess **32** and therefore inside the cam **30,** even if the shaped recess and the rolling bearing remain in contact with each other.

Finally, it can be appreciated that the prismatic seat **5** with open profile made in the projecting end **4** of the primary shaft **3** is substantially V-shaped and its shape matches the corner of the substantially square profile of the end pin **A1** of the shaft **A.**

These profiles, however, can also have different shapes, provided that these are such as to ensure that the shaft **A** is driven in rotation when the primary shaft **3** is set rotating.

Also in Figures from 7 to 10 it is possible to observe the presence of a drive element **40** connected to the primary shaft **3** and provided with a prismatic insert **41** configured in such a way that it can be fitted into a prismatic seat **A2** made in the head of the end pin **A1** of the shaft **A,** as can be observed in Figure 3.

The presence of the drive element **40,** which according to another embodiment may also be absent, serves to guarantee even further that the shaft **A** is driven in rotation when the primary shaft **3** is set rotating.

In practice, when the shaft **A** needs to be supported and set rotating, two supports **1** of the invention are arranged in such a way that they are aligned with each other and supported by the fixed supporting structure **S.**

Each support **1** is arranged in the open position with the cylindrical flange **6** placed against the tube **2** and then in the second position indicated by **C** that can be observed in Figures from 1 to 3 and in Figure 7.

In this position the shaped caps **7** are situated beside the respective prismatic seats **5,** each one of which can therefore accommodate an end pin **A1** of the shaft **A** that is inserted therein, as can be observed in Figures 1 and 2.

In order to close the supports, the operator rotates the cylindrical flange **6** manually, in such a way that the mutual interference between the cam **30** and the counter-cam **31,** starting from the configuration with open support shown in Figure 14 and passing through the intermediate position shown in Figure 15, moves the cylindrical flange **6** axially until reaching the closed configuration of the support and thus the first position indicated by **B** that can be observed in Figures from 4 to 6 and in Figure 9, in which each end pin **A1** is constrained between the shaped cap **7** and the prismatic seat **5.**

When the supports are closed, the locking means **10** intervene to constrain the cylindrical flange **6** to the projecting end **4** of the primary shaft **3.**

In fact, in Figure 9 it can be observed that in this position the spring **15** pushes the cylindrical peg **11** along the first longitudinal axis **Y** until its spherical head **11a** is inserted in the spherical housing **14** created in the projecting end **4** of the primary shaft **3** in order to prevent any possibility of axial and radial shifting of the cylindrical flange **6.**

The spherical configuration of the end of the cylindrical peg **11** has been selected because in the final stage of the axial movement of the cylindrical flange **6,** in order to achieve the closed position of the support the spherical head **11a** spontaneously tends to fit in the spherical housing **14** following the thrusting action of the spring **15.**

In fact, as soon as the two spherical profiles start to engage with each other, they spontaneously attract each other in order to complete the coupling operation.

This ensures that the cylindrical flange **6** always achieves the fixed configuration and thus the closed configuration of the support, contrary to that which happens with the supports of the known type, in fact the latter do not ensure that such closed configuration is always achieved.

Consequently, the support that is the subject of the invention eliminates the risk that, due to its imperfect closure, the end pin **A1** of the shaft **A** can come off the prismatic seat **5** and cause the shaft **A** to be detached during its rotation.

In order to open the support it is sufficient for the operator to act on the second end of any of the manoeuvring rods **20** or **21** that is more easily accessible to him/her, either **20b** or **21b,** and push it axially along the corresponding direction defined by the second longitudinal axes **Z1** or **Z2** inside the respective guide channel **22** or **23.**

In this way, the side **28** or **29** of the corresponding first end **20a** or **21a** of the manoeuvring rod **20** or **21** counteracts the thrusting plane **13a** of the cylindrical peg **11** and, overcoming the elastic force of the spring **15,** lowers it and releases its spherical head **11a** from the spherical housing **14.**

The cylindrical flange **6** thus returns to a condition in which it is free to rotate and move axially and thus can be re-positioned against the tube **2** in the condition with open support and then again the second position indicated by **C** in Figures from 1 to 3 and in Figure 7, again due to the interference between the cam **30** and the counter-cam **31** that is generated when the flange **6** is rotated manually by the operator.

It is appropriate to underline that the presence of two manoeuvring rods **20, 21,** arranged symmetrically and on opposite sides with respect to the locking means **10** and configured as described above, makes it possible to obtain a single support that can be indifferently used by the operator as a right support or a left support, which on the contrary does not happen with the supports of the known art that need to be made in the right and left version.

Finally, as the counter-cam **31** is constituted by a rolling bearing **33,** the contact between the cam **30** and the counter-cam **31** takes place through a rolling movement and not through a sliding movement like in the supports of the known art, and this means less friction, less wear and therefore longer life of the support and less need for maintenance operations for the replacement of the cam and of the counter-cam, with consequently reduced costs.

According to the above, it can be understood that the support that is the subject of the invention achieves all the set objects.

## Claims

1. Support (1) for the end pin (A1) of a shaft (A), comprising:
- a tube (2) suited to be associated with a supporting structure (S);
- a primary shaft (3) defining a main longitudinal axis (X), coaxially coupled inside said tube (2) and suited to be associated with power means suited to set it rotating according to said main longitudinal axis (X);
- a prismatic seat (5) with open profile created in the end (4) of said primary shaft (3) projecting from said tube (2) and configured in such a way that it houses said end pin (A1) of said shaft (A);
- a flange (6) slidingly coupled with said tube (2) and with said projecting end (4) of said primary shaft (3) and associated with a shaped cap (7);
- moving means (8) suited to move said flange (6) with respect to said tube (2) and to said projecting end (4) of said primary shaft (3) between:
- a first position (B), in which said flange (6) is axially spaced from said tube (2) according to said main longitudinal axis (X) and said shaped cap (7) is superimposed to said prismatic seat (5)
and
- a second position (C), in which said flange (6) is positioned against said tube (2) and said shaped cap (7) is arranged at the side of said prismatic seat (5);
- locking means (10) belonging to said flange (6) and to said projecting end (4) of said primary shaft (3), configured in such a way as to constrain said flange (6) to said projecting end (4) of said primary shaft (3) in said first position (B),
**characterized in that** it comprises:
- two manoeuvring rods (20, 21) slidingly housed in corresponding guide channels (22, 23) made in said flange (6), each one of said manoeuvring rods (20, 21) being provided with a first end (20a, 21a) configured so as to cooperate with said locking means (10) and a second end (20b, 21b) projecting from said flange (6) and at the disposal of the operator for moving said manoeuvring rod (20, 21) along the corresponding guide channel (22, 23).

2. Support (1) according to claim 1), **characterized in that** said locking means comprise:
- a peg (11) provided with a head (11a) and slidingly coupled into a seat (12) created in said flange (6);
- a slit (13) made in said peg (11) and configured so as to house said first ends (20a, 21a) of said manoeuvring rods (20, 21) slidingly coupled into said guide channels (22, 23);
- a housing (14) obtained in said projecting end (4) of said primary shaft (3) and configured so as to house said head (11a) of said peg (11) that projects from said seat (12) when said flange (6) is arranged in said first position (B);
- elastic means (15) interposed between the bottom (12b) of said seat (12) and said peg (11).

3. Support (1) according to claim 2), **characterized in that** said seat (12) and said peg (11) are both cylindrical and said housing (14) and said head (11a) of said peg (11) have both mutually matching profiles.

4. Support (1) according to claim 3), **characterized in that** said mutually matching profiles of said housing (14) and of said head (11a) of said peg (11) are spherical profiles.

5. Support (1) according to any of the claims from 2) to 4), **characterized in that** said seat (12) with the respective peg (11) define a first longitudinal axis (Y) orthogonal to said main longitudinal axis (X) of said primary shaft (3) and each one of said guide channels (22, 23) with the respective manoeuvring rod (20, 21) defines a second longitudinal axis (Z1, Z2), said first longitudinal axis (Y) and said second longitudinal axes (Z1, Z2) being coplanar with one another.

6. Support (1) according to claim 5), **characterized in that** said second longitudinal axes (Z1, Z2) are inclined and arranged symmetrically and on opposite sides with respect to said first longitudinal axis (Y).

7. Support (1) according to claim 6), **characterized in that** said first longitudinal axis (Y) and said second longitudinal axes (Z1, Z2) intersect each other at the level of said peg (11).

8. Support (1) according to claim 7), **characterized in that** said second longitudinal axes (Z1, Z2) form an angle (α) whose amplitude is 90°.

9. Support (1) according to any of the preceding claims, **characterized in that** said moving means (8) suited to move said flange (6) with respect to said tube (2) and to said projecting end (4) of said primary shaft (3) comprise a cam (30) present in said flange (6) and a counter-cam (31) present in said tube (2), said cam (30) and said counter-cam (31) being configured so as to generate a mutual rolling contact.

10. Support (1) according to claim 9), **characterized in that** said cam (30) comprises a shaped recess (32) created in said flange (6) and said counter-cam (31) comprises a rolling bearing (33) belonging to said tube (2).

11. Support (1) according to claim 10), **characterized in that** said rolling bearing (33) is housed inside said shaped recess (32) of said cam (30) when said flange (6) is arranged in said second position (C) against said tube (2).

12. Support (1) according to any of the preceding claims, **characterized in that** said prismatic seat with open profile (5) comprises at least one V-shaped notch.

## Patentansprüche

1. Halterung (1) für den Endzapfen (A1) einer Welle (A), Folgendes umfassend:
- eine Röhre (2), dazu geeignet, mit einer Tragstruktur (S) verbunden zu werden;
- eine eine Haupt-Längsachse (X) definierende Primärwelle (3), die koaxial in die besagte Röhre (2) eingekuppelt und dazu geeignet ist, mit Antriebsmitteln verbunden zu werden, die dazu geeignet sind, sie gemäß der besagten Haupt-Längsachse (X) in Drehung zu versetzen;
- einen prismatischen Sitz (5) mit offenem Profil, der in dem aus der besagten Röhre (2) herausragenden Ende (4) der besagten Primärwelle (3) ausgeführt und so konfiguriert ist, dass er den besagten Endzapfen (A1) der besagten Welle (A) aufnimmt;
- einen Flansch (6), der gleitend mit der besagten Röhre (2) und mit dem besagten herausragenden Ende (4) der besagten Primärwelle (3) gekuppelt und mit einer geformten Kappe (7) verbunden ist;
- Bewegungsmittel (8), dazu geeignet, den besagten Flansch (6) bezüglich der besagten Röhre (2) und des besagten herausragenden Endes (4) der besagten Primärwelle (3) zu bewegen zwischen:
- einer ersten Position (B), in welcher der besagte Flansch (6) axial gemäß der besagten Haupt-Längsachse (X) von der besagten Röhre (2) distanziert ist und die besagte geformte Kappe (7) auf den besagten prismatischen Sitz (5) aufgesetzt ist
und
- einer zweiten Position (B), in welcher der besagte Flansch (6) an der besagten Röhre (2) anliegend positioniert ist und die besagte geformte Kappe (7) seitlich von dem besagten prismatischen Sitz (5) angeordnet ist;
- zu dem besagten Flansch (6) und zu dem besagten herausragenden Ende (4) der besagten Primärwelle (3) gehörende Verriegelungsmittel (10), die so konfiguriert sind, dass sie den besagten Flansch (6) in der besagten ersten Position (B) an dem besagten herausragenden Ende (4) der besagten Primärwelle (3) blockieren,
**dadurch gekennzeichnet, dass** sie Folgendes umfasst:
- zwei Bedienstangen (20, 21), die gleitend in entsprechenden, in dem besagten Flansch (6) ausgeführten Führungskanälen (22, 23) aufgenommen sind, wobei jede der besagten Bedienstangen (20, 21) ein erstes Ende (20a, 21a) aufweist, das so konfiguriert ist, dass es mit den besagten Verriegelungsmitteln (10) zusammenwirkt, und ein zweites Ende (20b, 21b) aufweist, das aus dem besagten Flansch (6) herausragt und dem Bediener zur Verfügung steht, um die besagte Bedienstange (20, 21) entlang des entsprechenden Führungskanals (22, 23) zu bewegen.

2. Halterung (1) gemäß Patentanspruch 1), **dadurch gekennzeichnet, dass** die besagten Verriegelungsmittel Folgendes umfassen:
- einen Stift (11) mit einem Kopf (11a), der gleitend in einen in dem besagten Flansch (6) ausgeführten Sitz (12) eingekuppelt ist;
- einen in dem besagten Stift (11) ausgeführten Schlitz (13), der so konfiguriert ist, dass er die besagten ersten Enden (20a, 21a) der besagten Bedienstangen (20, 21) aufnimmt, welche gleitend in die besagten Führungskanäle (22, 23) eingekuppelt sind;
- eine in dem besagten herausragenden Ende (4) der besagten Primärwelle (3) ausgeführte Aufnahme (14), die so konfiguriert ist, dass sie den besagten Kopf (11a) des besagten Stifts (11), der aus dem besagten Sitz (12) herausragt, aufnimmt, wenn der besagte Flansch (6) sich in der besagten ersten Position (B) befindet;
- elastische Mittel (15), die zwischen dem Boden (12b) des besagten Sitzes (12) und dem besagten Stift (11) eingefügt sind.

3. Halterung (1) gemäß Patentanspruch 2), **dadurch gekennzeichnet, dass** der besagte Sitz (12) sowie der besagte Stift (11) zylindrisch sind und die besagte Aufnahme (14) sowie der besagte Kopf (11a) des besagten Stifts (11) wechselseitig zueinander passende Profile aufweisen.

4. Halterung (1) gemäß Patentanspruch 3), **dadurch gekennzeichnet, dass** die besagten wechselseitig zueinander passenden Profile der besagten Aufnahme (14) und des besagten Kopfes (11a) des besagten Stifts (11) kugelförmige Profile sind.

5. Halterung (1) gemäß eines jeden der Patentansprüche von 2) bis 4), **dadurch gekennzeichnet, dass** der besagte Sitz (12) mit dem entsprechenden Stift (11) eine erste Längsachse (Y) definiert, die orthogonal zu der besagten Haupt-Längsachse (X) der besagten Primärwelle (3) liegt und jeder der besagten Führungskanäle (22, 23) mit der entsprechenden Bedienstange (20, 21) eine zweite Längsachse (Z1, Z2) definiert, wobei die besagte erste Längsachse (Y) und die besagten zweiten Längsachsen (Z1, Z2) koplanar zueinander liegen.

6. Halterung (1) gemäß Patentanspruch 5), **dadurch gekennzeichnet, dass** die besagten zweiten Längsachsen (Z1, Z2) geneigt sind und bezüglich der besagten ersten Längsachse (Y) symmetrisch und auf entgegengesetzten Seiten angeordnet sind.

7. Halterung (1) gemäß Patentanspruch 6), **dadurch gekennzeichnet, dass** die besagte erste Längsachse (Y) und die besagten zweiten Längsachsen (Z1, Z2) einander auf der Höhe des besagten Stifts (11) schneiden.

8. Halterung (1) gemäß Patentanspruch 7), **dadurch gekennzeichnet, dass** die besagten zweiten Längsachsen (Z1, Z2) einen Winkel (α) bilden, dessen Amplitude 90° beträgt.

9. Halterung (1) gemäß eines jeden der vorstehenden Patentansprüche, **dadurch gekennzeichnet, dass** die besagten Bewegungsmittel (8), die dazu geeignet sind, den besagten Flansch (6) bezüglich der besagten Röhre (2) und des besagten herausragenden Endes (4) der besagten Primärwelle (3) zu bewegen, einen Nocken (30) in dem besagten Flansch (6) sowie einen Gegennocken (31) in der besagten Röhre (2) umfassen, wobei der besagte Nocken (30) und der besagte Gegennocken (31) so konfiguriert sind, dass sie einen wechselseitigen Rollkontakt erzeugen.

10. Halterung (1) gemäß Patentanspruch 9), **dadurch gekennzeichnet, dass** der besagte Nocken (30) eine in dem besagten Flansch (6) ausgeführte, geformte Vertiefung (32) aufweist, und der besagte Gegennocken (31) ein zu der besagten Röhre (2) gehörendes Wälzlager (33) umfasst.

11. Halterung (1) gemäß Patentanspruch 10), **dadurch gekennzeichnet, dass** das besagte Wälzlager (33) in der geformten Vertiefung (32) des besagten Nockens (30) aufgenommen ist, wenn der besagte Flansch (6) sich in der besagten zweiten, an der besagten Röhre (2) anliegenden Position (C) befindet.

12. Halterung (1) gemäß eines jeden der vorstehenden Patentansprüche, **dadurch gekennzeichnet, dass** der besagte, prismatische Sitz mit offenem Profil (5) wenigstens eine V-förmige Aussparung umfasst.

## Revendications

1. Support (1) pour le pivot d'extrémité (A1) d'un arbre (A), comprenant:
- un tuyau (2) indiqué pour être associé à une structure de soutien (S);
- un arbre primaire (3) définissant un axe longitudinal principal (X), couplé de manière coaxiale à l'intérieur dudit tuyau (2) et indiqué pour être associé à des moyens de motorisation aptes à le mettre en rotation selon ledit axe longitudinal principal (X);
- un logement prismatique (5) avec un profil ouvert réalisé dans l'extrémité (4) dudit arbre primaire (3) saillant dudit tuyau (2) et configuré de manière à accueillir ledit pivot d'extrémité (A1) dudit arbre (A);
- une bride (6) couplée de manière coulissante audit tuyau (2) et à ladite extrémité saillante (4) dudit arbre primaire (3) et associée à un capuchon galbé (7);
- des moyens de déplacement (8) indiquées pour déplacer ladite bride (6) par rapport audit tuyau (2) et à ladite extrémité saillante (4) dudit arbre primaire (3), entre:
- une première position (B) où ladite bride (6) est espacée de manière axiale dudit tuyau (2) selon ledit axe longitudinal principal (X) et ledit capuchon galbé (7) est superposé audit logement prismatique (5)
et
- une deuxième position (C) où ladite bride (6) est positionnée contre ledit tuyau (2) et ledit capuchon galbé (7) est disposé latéralement audit logement prismatique (5);
- des moyens de blocage (10) appartenant à ladite bride (6) et à ladite extrémité saillante (4) dudit arbre primaire (3), configurés de manière à bloquer ladite bride (6) sur ladite extrémité saillante (4) dudit arbre primaire (3) dans ladite première position (B),
**caractérisé en ce qu'**il comprend:
- deux tiges de manoeuvre (20, 21) logées de manière coulissante dans des canaux de guidage correspondants (22, 23) réalisés dans ladite bride (6), chacune desdites tiges de manoeuvre (20, 21) étant dotée d'une première extrémité (20a, 21a) configurée de manière à coopérer avec lesdits moyens de blocage (10) et une deuxième extrémité (20b, 21b) saillant de ladite bride (6) et à disposition de l'opérateur pour le déplacement de ladite tige de manoeuvre (20, 21) le long du canal de guidage correspondant (22, 23).

2. Support (1) selon la revendication 1), **caractérisé en ce que** lesdits moyens de blocage comprennent:
- une cheville (11) dotée d'une tête (11a) couplée de manière coulissante dans un logement (12) réalisé dans ladite bride (6);
- une fente (13) réalisée dans ladite cheville (11) et configurée de manière à accueillir lesdites premières extrémités (20a, 21a) desdites tiges de manoeuvre (20, 21) couplées de manière coulissante dans lesdits canaux de guidage (22, 23);
- un logement (14) réalisé dans ladite extrémité saillante (4) dudit arbre primaire (3) et configuré de manière à accueillir ladite tête (11a) de ladite cheville (11) qui saillit dudit logement (12) quand ladite bride (6) est disposée dans ladite première position (B);
- des moyens élastiques (15) interposés entre le fond (12b) dudit logement (12) et ladite cheville (11).

3. Support (1) selon la revendication 2), **caractérisé en ce que** ledit logement (12) et ladite cheville (11) sont cylindriques et ledit logement (14) et ladite tête (11a) de ladite cheville (11) présentent des profils réciproquement adaptables.

4. Support (1) selon la revendication 3), **caractérisé en ce que** lesdits profils réciproquement adaptables dudit logement (14) et de ladite tête (11a) de ladite cheville (11) sont des profils sphériques.

5. Support (1) selon l'une quelconque des revendications de 2) à 4), **caractérisé en ce que** ledit logement (12) avec la cheville correspondante (11) définissent un premier axe longitudinal (Y) perpendiculaire audit axe longitudinal principal (X) dudit arbre primaire (3) et chacun desdits canaux de guidage (22, 23) avec la tige de manoeuvre correspondante (20, 21) définit un deuxième axe longitudinal (Z1, Z2), ledit premier axe longitudinal (Y) et lesdits deuxièmes axes longitudinaux (Z1, Z2) étant coplanaires entre eux.

6. Support (1) selon la revendication 5), **caractérisé en ce que** lesdits deuxièmes axes longitudinaux (Z1, Z2) sont inclinés et disposés symétriquement et sur des côtés opposés par rapport audit premier axe longitudinal (Y).

7. Support (1) selon la revendication 6), **caractérisé en ce que** ledit premier axe longitudinal (Y) et lesdits deuxièmes axes longitudinaux (Z1, Z2) se croisent mutuellement à hauteur de ladite cheville (11).

8. Support (1) selon la revendication 7), **caractérisé en ce que** lesdits deuxièmes axes longitudinaux (Z1, Z2) forment entre eux un angle (α) ayant une ampleur de 90°.

9. Support (1) selon l'une quelconque des revendications précédentes, **caractérisé en ce que** lesdits moyens de déplacement (8) de ladite bride (6) par rapport audit tuyau (2) et à ladite extrémité saillante (4) dudit arbre primaire (3) comprennent une came (30) présente dans ladite bride (6) et une contre-came (31) présente dans ledit tuyau (2), ladite came (30) et ladite contre-came (31) étant configurées de manière à réaliser un contact réciproque à roulement.

10. Support (1) selon la revendication 9), **caractérisé en ce que** ladite came (30) comprend une cavité galbée (32) réalisée dans ladite bride (6) et ladite contre-came (31) comprend un palier à roulement (33) appartenant audit tuyau (2).

11. Support (1) selon la revendication 10), **caractérisé en ce que** ledit palier à roulement (33) est accueilli à l'intérieur de ladite cavité galbée (32) de ladite came (30) quand ladite bride (6) est disposée dans ladite deuxième position (C) contre ledit tuyau (2).

12. Support (1) selon l'une quelconque des revendications précédentes, **caractérisé en ce que** ledit logement prismatique avec un profil ouvert (5) comprend au moins une entaille en forme de V.
